# FASCICULE DE BREVET EUROPEEN

(11) **EP 1 649 579 B1**
(45) Date de publication et mention de la délivrance du brevet: **14.02.2007**
(21) Numéro de dépôt: 04786000.2
(22) Date de dépôt: 26.07.2004
(51) Int. Cl.: H02K 11/02

(54) **ALTERNATEUR COMPORTANT DES MOYENS PERFECTIONNES POUR ELIMINER LES CHARGES ELECTROSTATIQUES**
LICHTMASCHINE MIT VERBESSERTEN MITTELN ZUM BESEITIGEN ELEKTROSTATISCHER AUFLADUNG
ALTERNATOR PROVIDED WITH IMPROVED MEANS FOR REMOVING ELECTROSTATIC CHARGES

(30) Priorité: 31.07.2003 FR 0309431
(43) Date de publication de la demande: 26.04.2006
(73) Titulaire: VALEO EQUIPEMENTS ELECTRIQUES MOTEUR, 94017 Créteil Cedex (FR)
(72) Inventeur: GRESSIER, Vincent, F-62170 La Calotterie (FR); MILLON, François, F-62200 Boulogne sur Mer (FR)
(74) Mandataire: Gamonal, Didier
(86) Numéro de dépôt international: PCT/FR2004/001994
(87) Numéro de publication internationale: WO 2005/015711

(56) Documents cités:
- EP-A- 0 746 080
- WO-A-97/01200
- DE-A1- 10 158 963
- FR-A- 2 693 324
- FR-A- 2 807 889
- FR-A- 2 828 028
- GB-A- 2 268 546
- US-A- 4 873 512
- US-A- 5 095 235
- US-A- 5 804 903

## Description

### DOMAINE TECHNIQUE DE L'INVENTION

La présente invention concerne un alternateur-de véhicule automobile.

### ETAT DE LA TECHNIQUE

L'invention concerne plus particulièrement un alternateur du type de celui décrit et représenté dans le document FR-A-2.807.889 qui comporte des moyens tendant à supprimer l'électricité statique.

Ce document propose notamment un alternateur de véhicule automobile du type comportant :
- un carter portant un stator;
- un rotor dont l'arbre central est monté à rotation dans le stator et qui est constitué d'une partie dite magnétique comportant notamment au moins l'arbre du rotor et des pièces polaires, et d'au moins un enroulement d'induction ;
- et des moyens visant à éliminer les charges électrostatiques de l'alternateur, en assurant une liaison électrique résistive permanente entre la partie magnétique du rotor et son enroulement.

Toujours pour favoriser l'évacuation des charges électrostatiques, il a été proposé dans la demande de brevet français n°03.06553 du 30 mai 2003 d'assurer une liaison électrique permanente entre l'arbre du rotor et le carter qui porte le stator, avec ses flasques latéraux, et donc avec la masse électrique du véhicule. En effet, le stator proprement dit et son carter qui le porte sont reliés à la masse électrique du véhicule. Comme décrit dans le document EP240644, le stator peut être monté dans le carter par l'intermédiaire d'un élément amortisseur tel que du caoutchouc. Dans ce cas, les potentiels électriques du carter et du stator peuvent être différents, le potentiel du carter étant toutefois relié à la masse du véhicule.

A cet effet, une poulie métallique qui est fixée sur l'arbre avec lequel elle est en liaison électrique permanente par son alésage interne est reliée électriquement en permanence au flasque latéral.

Cette liaison est assurée par un frotteur conducteur porté par le flasque arrière et qui frotte en permanence sur une portion en vis-à-vis de la face latérale avant de la poulie et/ou sur la courroie.

A titre de variante de cette conception, comme le frotteur est une pièce susceptible de s'user, il peut appartenir à la courroie elle-même et frotter sur la face latérale externe du flasque arrière.

Ces conceptions permettent aussi d'évacuer les charges électriques qui se forment sur la courroie en raison des frottements à grandes vitesses de la courroie sur les diverses poulies qu'elle parcourt et des charges qu'elles recueille à cette occasion.

L'invention vise à proposer des moyens simples à mettre en oeuvre pour assurer cette liaison électrique sans subir les inconvénients divers liés au frottement permanent.

### EXPOSE DE L'INVENTION

A cet effet, l'invention propose un alternateur de véhicule automobile du type comportant :
- un carter portant un stator;
- un rotor dont l'arbre central est monté à rotation dans le stator, une extrémité axiale arrière de l'arbre du rotor qui s'étend axialement à l'extérieur du stator, portant une poulie d'entraînement en rotation de l'arbre entraînée en rotation par un élément souple d'entraînement, notamment une courroie ou une chaîne ;
- et des moyens visant à éliminer les charges électrostatiques de l'alternateur,
caractérisé en ce que lesdits moyens assurent une liaison électrique sans contact selon un trajet contrôlé entre d'une part le le carter qui porte le stator, et d'autre part la poulie et/ou l'élément souple d'entraînement.

Ainsi, le trajet de décharge contrôlé se situe à l'extérieur de l'alternateur.

Selon d'autres caractéristiques de l'invention :
- ces moyens comportent au moins un pic de concentration des charges électriques qui est formé sur une face externe du carter, et qui s'étend en relief en direction d'une portion en vis-à-vis de la poulie et/ou de l'élément souple d'entraînement de manière à éliminer les charges électrostatiques par formation d'arcs électriques entre le pic et ladite portion ;
- lesdits moyens comportent une série de pics de concentration des charges électriques.
- les pics de ladite série sont adjacents pour constituer une collerette en saillie, radialement et/ou axialement, comportant un bord périphérique d'extrémité libre de profil aigu ;
- au moins un pic est réalisé venu de matière avec la partie correspondante du carter;
- au moins un pic s'étend axialement à partir d'une portion de face latérale transversale externe du carter;
- au moins un pic s'étend radialement à partir d'une portion de face latérale transversale externe du carter;
- au moins un pic s'étend en regard d'une portion en vis-à-vis de face latérale transversale de l'élément souple d'entraînement ;
- au moins un pic s'étend en regard d'une portion en vis-à-vis de face latérale transversale de la poulie ;
- au moins un pic s'étend en regard d'une portion en vis-à-vis de face latérale cylindrique de la poulie.

### BREVE DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe axiale partielle d'un alternateur selon l'état de la technique ;
- la figure 2 est une vue à plus grande échelle du détail D2 de la figure qui illustre schématiquement un mode premier mode de réalisation préférée de l'invention ;
- la figure 3 est une vue schématique analogue à celle de la figure 2 qui illustre un deuxième mode de réalisation de l'invention ;
- la figure 4 est une vue schématique analogue à celle de la figure 2 qui illustre un troisième mode de réalisation de l'invention ; et

### DESCRIPTION DETAILLEE DES FIGURES

Dans la description qui va suivre, on adoptera à titre non limitatif une orientation avant-arrière de gauche à droite en considérant les figures.

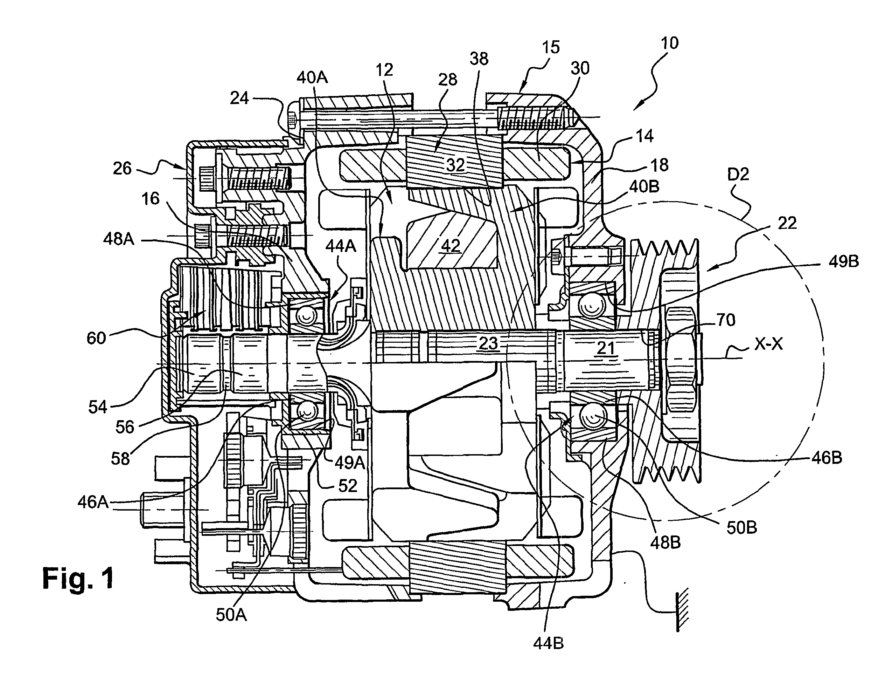

On a représenté sur la figure 1 un alternateur 10 qui comporte essentiellement un rotor 12 qui est entraîné en rotation autour de son axe X-X à l'intérieur d'un stator sensiblement annulaire 14 lui-même fixé à l'intérieur d'un carter 15 sensiblement cylindrique de l'alternateur 10, ici du type de celui décrit et représenté dans le document EP-A-0.515.259 au contenu duquel on pourra se reporter pour plus de détails et précisions.

Le carter 15 est fermé à ses deux extrémités axiales par des flasques transversaux avant 16 et arrière 18 au travers desquels un arbre 21 du rotor est monté à rotation. L'arbre 21 et les flasques 16 et 18 sont en matériau conducteur de l'électricité, notamment en métal.

A son extrémité axiale arrière, l'arbre 21, qui dépasse à l'extérieur du flasque transversal arrière 18, porte une poulie métallique 22 qui est destinée à recevoir une courroie d'entraînement (non représentée à la figure 1) en rotation du rotor 12. En variante non représentée, la courroie est remplacée par une chaîne souple de transmission.

Sur une face externe 24 du palier ou flasque transversal opposé avant 16, un capot de protection 26 recouvre des moyens de régulation et de mise en forme du courant électrique produit par l'alternateur qui comprennent notamment un pont redresseur (ici à diodes non référencées à la figure 1), un régulateur de tension ainsi que des bornes de liaison à un circuit électrique du véhicule.

De manière connue, le stator 14 comporte un corps 32 réalisé sous la forme d'un paquet de tôles 28, qui s'étendent sensiblement radialement et dont chacune est dotée d'encoches pour le passage d'enroulements ou bobinages de fils conducteurs 30 qui forment l'induit de l'alternateur. En variante non représentée, les fils conducteurs enroulés sont remplacés par des conducteurs en forme d'épingle.

Le corps de stator 32 comporte une surface cylindrique interne 38 parfaitement cylindrique qui délimite un espace à l'intérieur duquel le rotor 12 est monté à rotation.

Le rotor 12 à griffes est essentiellement constitué par deux roues polaires identiques 40A, 40B qui sont montées sur la partie cannelée centrale 23 de l'arbre 21 du rotor 12, pour leur entraînement en rotation, et par une bobine ou bobinage 42 agencé entre les roues polaires 40A, 40B métalliques portant chacune un ventilateur interne de refroidissement de l'alternateur.

L'arbre de rotor 21 est monté à rotation dans les flasques 16 et 18 au moyen d'un roulement à billes avant 44A et d'un roulement à billes arrière 44B qui comportent chacun une bague intérieure de roulement 46A, 46B et une bague extérieure de roulement 48A, 48B avec interposition de billes 50A, 50B respectivement.

Chaque composant d'un roulement est réalisé en métal conducteur de l'électricité.

Chaque bague intérieure 46A, 46B est en contact intime avec la surface cylindrique convexe de l'arbre 21 du rotor 12 avec lequel elle est donc aussi en contact électrique.

Comme illustré à la figure 1, la bague extérieure 48B du roulement arrière 44B est montée directement dans un logement correspondant 49B du flasque métallique arrière 18 avec lequel elle est aussi en contact électrique.

Par contre, la bague extérieure 48A du roulement avant 44A est montée dans un logement correspondant 49A du flasque avant 16 avec interposition d'une bague 52 d'amortissement des vibrations qui est généralement en matière plastique isolante de l'électricité.

De manière connue, l'extrémité axiale avant de l'arbre 21 porte deux bagues collectrices avant 54 et arrière 56 qui sont adjacentes et qui sont séparées par un espace axial se présentant sous la forme d'une gorge de séparation 58.

Chacune des bagues collectrices 54 et 56 est conductrice de l'électricité et est prévue pour coopérer avec des balais associés d'un porte-balais 60 logé dans le capot 26. Les bagues collectrices sont reliées, par des liaisons filaires non représentées, aux extrémités du bobinage 42.

La bague avant 54 est traditionnellement au potentiel dit « nul », c'est à dire sensiblement au potentiel de la masse électrique du véhicule à laquelle est notamment relié le stator par les moyens de fixation de l'alternateur sur la structure métallique (non représentée) du véhicule.

La bague arrière 56, adjacente au roulement avant 44A, est au potentiel de l'enroulement ou bobinage 42 du rotor, qui par exemple de l'ordre de 14 Volts.

Pour favoriser l'évacuation des charges électrostatiques, il est souhaitable d'assurer une liaison électrique entre l'arbre 21 du rotor 12 et le carter avec ses flasques latéraux, et donc avec la masse électrique du véhicule.

La poulie métallique 22 est fixée sur l'arbre 21 avec lequel elle est en liaison électrique permanente par son alésage interne 70.

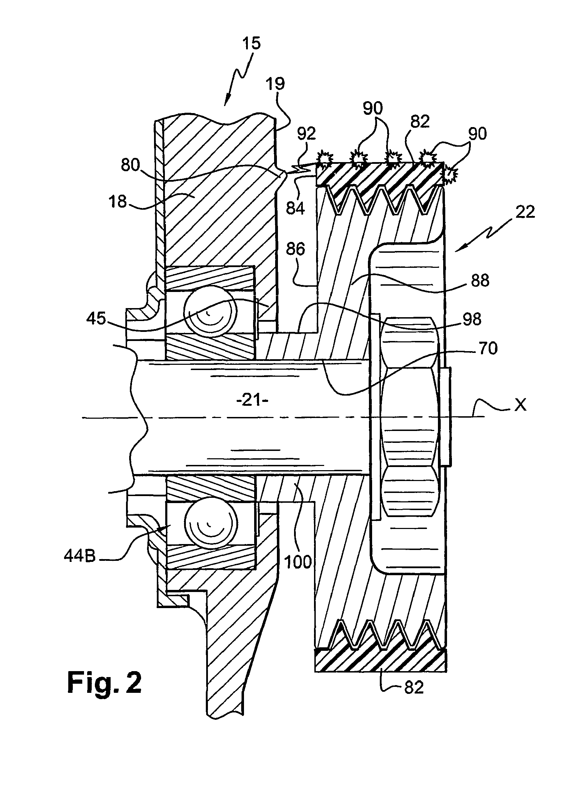

Comme on peut le voir à la figure 2, et conformément aux enseignements de l'invention, la face latérale 19 du flasque arrière 18 du carter 15 qui porte le stator 14 comporte ici une pointe ou pic en relief qui s'étend axialement vers l'arrière en direction de la courroie 82 qui présente ici schématiquement une section rectangulaire rainurée avec sa face ou bord latéral transversal avant 84 qui s'étend dans le même plan que la face latérale avant 86 du flasque 88 de la poulie 22.

On a représenté schématiquement par des "étincelles" les charges électriques 90 qui s'accumulent sur l'ensemble constitué par la poulie 22 et la courroie 82.

Lorsqu'un seuil de tension suffisante est atteint, dite tension de claquage, il se forme un arc électrique 92, symbolisé par un éclair entre le bord 84 de la courroie 82 et le pic 80, le trajet électrique de décharge étant ainsi orienté de manière prédéterminée et en direction du flasque qui est relié à la masse électrique du véhicule.

Cette décharge électrique orientée et privilégiée, ou effet de "pointe", vient du fait que le champ électrique est plus fort au voisinage d'une pointe (ou pic) conductrice chargée. Tous les phénomènes d'ionisation (ionisation due à un champ électrique intense) sont donc plus importants au voisinage d'une pointe. Cela est dû au fait que le potentiel varie en 1/r alors que le champ électrique varie en 1/r²

Soit deux boules de rayons "r" et "R" =2r portées au même potentiel. Puisque les deux boules sont au même potentiel, cela veut dire que sur la grosse boule (R), il y a deux fois plus de charges que sur la petite boule de rayon "r", le potentiel variant en raison inverse du rayon de la boule.

Or, la surface, ou aire surfacique, de la "grosse" boule n'est pas deux fois plus grande, mais quatre fois plus grande que celle de la "petite" boule. La densité surfacique de charges est deux fois plus importante sur la petite boule.

Cela n'explique pas pourquoi le champ est plus fort au voisinage de la petite boule. En effet, sur la petite boule la charge est q, et sur la grosse boule la charge est Q = 2q.

Si l'on mesure le champ en deux points, chacun distant de R du centre de chacune des deux boules, le champ est plus fort au voisinage de la grosse boule. En effet, dans un cas la valeur du champ est égale à Kq/R pour la petite boule et est égale à 2Kq/R pour la grosse boule.

Par conséquent, à distance égale, le champ électrique de la petite boule est deux fois plus faible.

Par contre, on peut "s'approcher" au plus près du centre de la petite boule, ce qui n'est pas possible avec la grosse boule, puisque son rayon est R.

Donc, comme on peut s'approcher deux fois plus près du centre de la petite boule que de celui de la grosse boule, le champ devrait être quatre fois plus fort (puisque le champ varie en 1/ r² et que l'on est deux fois plus près).

En résumé, parce qu'il y a deux fois moins de charges, le champ devrait être deux fois moins fort. D'autre part, parce que la surface de la petite boule est deux fois plus près de son centre, le champ devrait y être quatre fois plus fort. Finalement, le champ n'est que deux fois plus fort à la surface de la petite boule.

En raison de l'importance du champ électrique au voisinage d'une pointe, l'air s'ionise plus facilement. L'air est donc meilleur conducteur de l'électricité au voisinage d'une pointe chargée qu'au voisinage d'une surface chargée de plus grand rayon de courbure. C'est la raison pour laquelle la foudre ou arc électrique de décharge frappe de préférence une pointe ou pic.

Par analogie, c'est la poulie 22 et/ou la courroie 82 qui constitue la "grosse boule" et une excroissance en forme de pic 80 ou analogue constitue la "petite boule".

Bien entendu, il est possible de prévoir plusieurs pics qui sont par exemple agencés en arc de cercle centré autour de l'axe X-X.

Les pics ou pointes 80 permettent d'obtenir une concentration des charges électriques et déterminent des chemins de fuites très courts et beaucoup moins résistifs que par exemple entre l'arbre et un collecteur, ou encore entre l'arbre et une cage extérieure de roulement.

Les charges électriques ne traversent ni le rotor, ni les roulements en évitant ainsi tout risque, notamment de détérioration ou de surcharges électriques internes.

Lorsque les pics 80 sont réalisés directement par moulage avec le flasque arrière, la mise en oeuvre de l'invention est obtenue à coût nul, c'est à dire sans composant ni main d'oeuvre supplémentaire en effectuant simplement des modifications mineures de la fonderie. En variante les pics 80 peuvent consister en des pièces métalliques rapportées fixées par exemple par vissage sur le flasque arrière. Il est également possible d'avoir une combinaison de pics 80 issus de moulage et de pics rapportés, chacun de ces pics pouvant s'étendre soit axialement soit radialement comme décrit ci-après.

Sans sortir du cadre de l'invention et à titre de variante non représentée de ce mode de réalisation, la courroie 82 (ou l'élément souple de transmission qui en tient lieu) peut comporter dans son bord latéral avant 84 des pics ou excroissances analogues aux pics 80 à partir desquels se forment les arcs électriques de décharge en direction des pics 80 du flasque, en favorisant encore ainsi davantage le "guidage" des décharges électriques au passage de la courroie en regard des pics 80.

Grâce au premier mode de réalisation qui vient d'être décrit, les pointes ou pics 80 qui se trouvent en vis-à-vis du bord latéral transversal avant 84 de la courroie permettent une évacuation des charges électriques accumulées au niveau de la courroie, avant qu'elles n'atteignent la poulie proprement dite et la partie magnétique formée par l'ensemble rotorique.

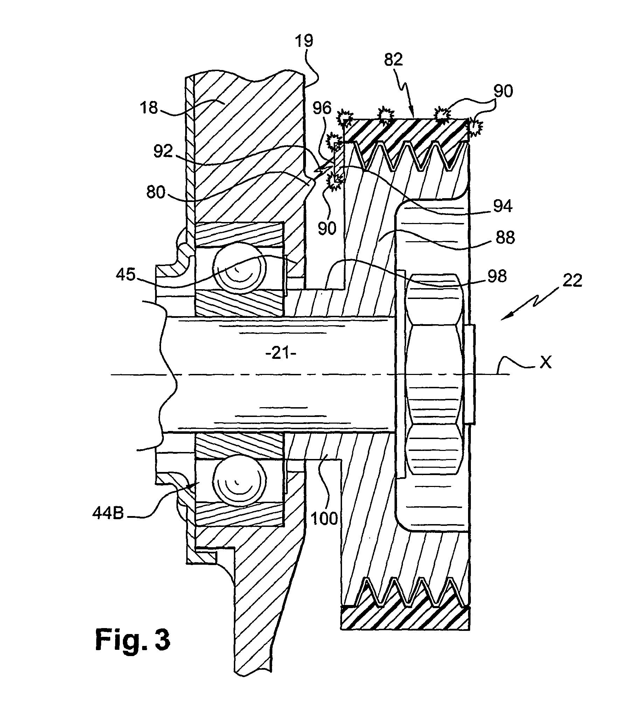

Selon le deuxième mode de réalisation illustré à la figure 3, les pics 80 sont agencés en regard de la face latérale avant 86 de la poulie 22, et plus précisément en regard d'une portion de face latérale annulaire 94 appartenant à une excroissance 96 qui permet de maîtriser avec précision le phénomène, et notamment la distance entre les pics et la poulie qui est par exemple de l'ordre de 0,5 mm, cette valeur étant notamment inférieure à la distance, de l'ordre de 2 à 3 mm entre la bague collectrice et l'arbre.

La densité surfacique de charges est localement renforcée sur la poulie, le champ électrique est localement plus important, l'air s'ionise davantage et devient plus conducteur et l'efficacité du principe selon l'invention est encore améliorée.

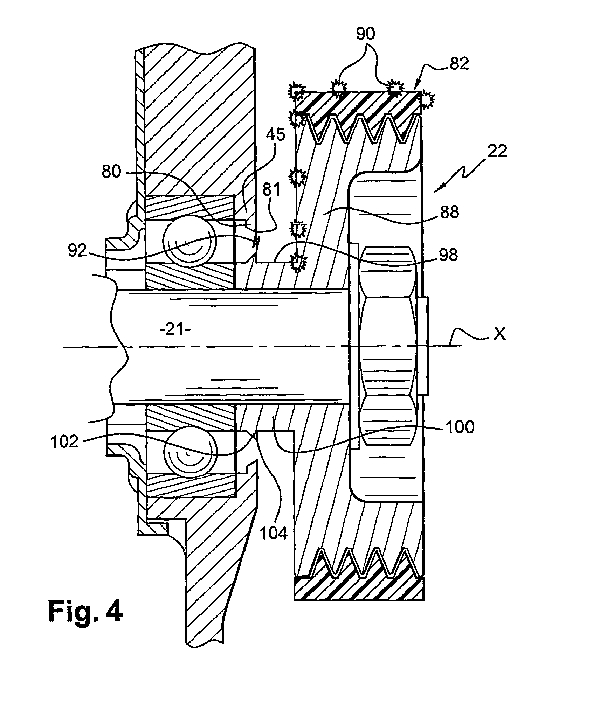

Selon le troisième mode de réalisation illustré à la figure 4, les pics ou excroissances 80 s'étendent radialement vers l'intérieur en direction de la surface latérale cylindrique convexe externe 98 d'un manchon axial tubulaire avant 100 du moyeu de la poulie 22.

Les pointes 80 peuvent être réparties angulairement de manière régulière ou être constituées par une collerette radiale intérieure continue correspondant à une multiplicité de pics adjacents et dont le bord radial interne aigu 81 constitue un bord de pointe ou pic continu.

Pour maîtriser encore davantage le phénomène, le manchon 100 peut comporter une collerette radiale extérieure 102 dont le bord radial externe aigu 104 s'étend en regard des pointes 80 ou du bord 81 de la collerette continue 80.

La collerette peut être réalisée venue de matière avec le flasque ou rapportée sur celui-ci, mais elle est alors considéré comme une partie du stator au sens de l'invention.

Les différents modes de réalisation et variantes peuvent bien entendu être combinés sans sortir du cadre de l'invention. Bien entendu, l'alternateur est réversible et il permet de démarrer le moteur thermique du véhicule.

## Revendications

1. Alternateur (10) de véhicule automobile du type comportant :
- un carter (15,18), portant un stator (14), dont le potentiel électrique est relié à la masse du véhicule
- un rotor (12) dont l'arbre central (21) est monté à rotation dans le stator, une extrémité axiale arrière de l'arbre (21) du rotor qui s'étend axialement à l'extérieur du stator, portant une poulie (22) d'entraînement en rotation de l'arbre entraînée en rotation par un élément souple d'entraînement, notamment une courroie ou une chaîne ;
- et des moyens visant à éliminer les charges électrostatiques de l'alternateur,
**caractérisé en ce que** lesdits moyens (80) assurent une liaison électrique sans contact selon un trajet extérieur contrôlé entre d'une part le carter (15), et d'autre part la poulie (22) et/ou l'élément souple d'entraînement (80).

2. Alternateur selon la revendication précédente, **caractérisé en ce que** lesdits moyens comportent au moins un pic (80) de concentration des charges électriques (90) qui est formé sur une face externe (19) du carter (15,18), et qui s'étend en relief en direction d'une portion en vis-à-vis de la poulie (22) et/ou de l'élément souple d'entraînement (82) de manière à éliminer les charges électrostatiques par formation d'arcs électriques entre le pic (80) et ladite portion (84).

3. Alternateur selon la revendication précédente, **caractérisé en ce que** lesdits moyens comportent une série de pics (80) de concentration des charges électriques.

4. Alternateur selon la revendication précédente, **caractérisé en ce que** les pics (80) de ladite série sont adjacents pour constituer une collerette en saillie, radialement et/ou axialement, comportant un bord périphérique d'extrémité libre de profil aigu (81)

5. Alternateur selon l'une quelconque des revendications 2 à 4, **caractérisé en ce qu'**au moins un pic (80) est réalisé venu de matière avec la partie correspondante du carter (15, 18).

6. Alternateur selon l'une quelconque des revendications 2 à 5, **caractérisé en ce qu'**au moins un pic (80) s'étend axialement à partir d'une portion de face latérale transversale externe (19) du carter (15,18).

7. Alternateur selon l'une quelconque des revendications 2 à 5, **caractérisé en ce qu'**au moins pic (80) s'étend radialement à partir d'une portion de face latérale transversale externe (19) du carter (15,18).

8. Alternateur selon la revendication précédente **caractérisé en ce que** le pic (80) s'étend en direction de la surface latérale cylindrique convexe externe (98) d'un manchon axial tubulaire (100) du moyeu de la poulie (22).

9. Alternateur selon l'une quelconque des revendications 2 à 6, **caractérisé en ce qu'**au moins un pic (80) s'étend en regard d'une portion en vis-à-vis de face latérale transversale (84) de l'élément souple d'entraînement (80).

10. Alternateur selon l'une quelconque des revendications 2 à 6, **caractérisé en ce qu'**au moins un pic (80) s'étend en regard d'une portion en vis-à-vis de face latérale transversale (86, 94, 96) de la poulie (22).

11. Alternateur selon l'une quelconque des revendications 2 à 5, 7, 8, **caractérisé en ce qu'**au moins un pic (80) s'étend en regard d'une portion en vis-à-vis d'une face latérale cylindrique (98, 100) de la poulie (22).

## Claims

1. Motor vehicle alternator (10) of the type comprising:
- a casing (15, 18) carrying a stator (14), the electrical potential of which is connected to the vehicle earth,
- a rotor (12), the central shaft (21) of which is mounted for rotation in the stator, a rear axial end of the shaft (21) of the rotor that extends axially from the outside of the stator carrying a pulley (22) for rotationally driving the shaft driven in rotation by a flexible drive element, in particular a belt or chain,
- and a means aimed at eliminating the electrostatic charges on the alternator,
**characterised in that** the said means (80) provide a contactless electrical connection on a controlled external path between on the one hand the casing (15) and on the other hand the pulley (22) and/or the flexible drive element (80).

2. Alternator according to the preceding claim, **characterised in that** the said means comprise at least one peak (80) concentrating the electrical charges (90) that is formed on an external face (19) of the casing (15, 18) and that extends in relief in the direction of a facing portion of the pulley (22) and/or of the flexible drive element (82) so as to eliminate the electrostatic charges by the formation of electric arcs between the peak (80) and the said portion (84).

3. Alternator according to the preceding claim, **characterised in that** the said means comprise a series of peaks (80) concentrating the electrical charges.

4. Alternator according to the preceding claim, **characterised in that** the peaks (80) in the said series are adjacent in order to constitute a collar projecting radially and/or axially, comprising a free-end peripheral edge with a sharp profile (81).

5. Alternator according to any one of claims 2 to 4, **characterised in that** at least one peak (80) is produced in one piece with the corresponding part of the casing (15, 18).

6. Alternator according to any one of claims 2 to 5, **characterised in that** at least one peak (80) extends axially from a portion of the external transverse lateral face (19) of the casing (15, 18).

7. Alternator according to any one of claims 2 to 5, **characterised in that** at least one peak (80) extends radially from a portion of an external transverse lateral face (19) of the casing (15, 18).

8. Alternator according to the preceding claim, **characterised in that** the peak (80) extends in the direction of the external convex cylindrical lateral surface (98) of a tubular axial sleeve (100) of the hub of the pulley (22).

9. Alternator according to any one of claims 2 to 6, **characterised in that** at least one peak (80) extends opposite a facing portion of the transverse lateral face (84) of the flexible drive element (80).

10. Alternator according to any one of claims 2 to 6, **characterised in** at least one peak (80) extends opposite a facing portion of the transverse lateral face (86, 94, 96) of the pulley (22).

11. Alternator according to any one of claims 2 to 5, 7, 8, **characterised in that** at least one peak (80) extends opposite a facing portion of a cylindrical lateral face (98, 100) of the pulley (22).

## Patentansprüche

1. Wechselstromgenerator (10) für Kraftfahrzeuge, umfassend:
- ein Gehäuse (15, 18), das einen Ständer (14) trägt, dessen elektrisches Potential mit der Masse des Fahrzeugs verbunden ist;
- einen Läufer (12), dessen mittige Welle (21) drehbar im Ständer gelagert ist, wobei ein hinteres axiales Ende der Welle (21) des Läufers, das sich axial außerhalb des Ständers erstreckt, eine Antriebsscheibe (22) für den drehenden Antrieb der Welle trägt, die durch ein biegsames Antriebselement, insbesondere durch einen Riemen oder eine Kette, drehend angetrieben wird;
- und Mittel, deren Aufgabe darin besteht, die elektrostatischen Aufladungen des Wechselstromgenerators zu beseitigen,
**dadurch gekennzeichnet, dass** die besagten Mittel (80) eine kontaktfreie elektrische Verbindung entlang einer kontrollierten äußeren Bahn zwischen dem Gehäuse (15) einerseits und der Antriebsscheibe (22) und/oder dem biegsamen Antriebselement (80) andererseits herbeiführen.

2. Wechselstromgenerator nach dem vorangehenden Anspruch, **dadurch gekennzeichnet, dass** die besagten Mittel wenigstens eine Konzentrationsspitze (80) der elektrischen Ladungen (90) umfassen, die auf einer Außenfläche (19) des Gehäuses (15, 18) ausgebildet ist und die sich vorstehend in Richtung eines gegenüberliegenden Abschnitts der Antriebsscheibe (22) und/oder des biegsamen Antriebselements (82) erstreckt, um die elektrostatischen Aufladungen durch Bildung von Lichtbögen zwischen der Spitze (80) und dem besagten Abschnitt (84) zu beseitigen.

3. Wechselstromgenerator nach dem vorangehenden Anspruch, **dadurch gekennzeichnet, dass** die besagten Mittel eine Reihe von Konzentrationsspitzen (80) der elektrischen Ladungen umfassen.

4. Wechselstromgenerator nach dem vorangehenden Anspruch, **dadurch gekennzeichnet, dass** die Spitzen (80) der besagten Reihe benachbart angeordnet sind, um einen radial und/oder axial vorspringenden Kragen zu bilden, der einen freien Abschlussumfangsrand mit spitzem Profil (81) umfasst.

5. Wechselstromgenerator nach einem der Ansprüche 2 bis 4, **dadurch gekennzeichnet, dass** das wenigstens eine Spitze (80) einstückig mit dem entsprechenden Teil des Gehäuses (15, 18) ausgeführt ist.

6. Wechselstromgenerator nach einem der Ansprüche 2 bis 5, **dadurch gekennzeichnet, dass** sich wenigstens eine Spitze (80) axial von einem Abschnitt einer äußeren Querseitenfläche (19) des Gehäuses (15, 18) aus erstreckt.

7. Wechselstromgenerator nach einem der Ansprüche 2 bis 5, **dadurch gekennzeichnet, dass** sich wenigstens eine Spitze (80) radial von einem Abschnitt einer äußeren Querseitenfläche (19) des Gehäuses (15, 18) aus erstreckt.

8. Wechselstromgenerator nach dem vorangehenden Anspruch, **dadurch gekennzeichnet, dass** sich die Spitze (80) in Richtung der äußeren konvexen zylindrischen Seitenfläche (98) einer rohrförmigen axialen Muffe (100) der Nabe der Antriebsscheibe (22) erstreckt.

9. Wechselstromgenerator nach einem der Ansprüche 2 bis 6, **dadurch gekennzeichnet, dass** sich wenigstens eine Spitze (80) gegenüber einem gegenüberliegenden Abschnitt einer Querseitenfläche (84) des biegsamen Antriebselements (80) erstreckt.

10. Wechselstromgenerator nach einem der Ansprüche 2 bis 6, **dadurch gekennzeichnet, dass** sich wenigstens eine Spitze (80) gegenüber einem gegenüberliegenden Abschnitt einer Querseitenfläche (86, 94, 96) der Antriebsscheibe (22) erstreckt.

11. Wechselstromgenerator nach einem der Ansprüche 2 bis 5, 7, 8, **dadurch gekennzeichnet, dass** sich wenigstens eine Spitze (80) gegenüber einem gegenüberliegenden Abschnitt einer zylindrischen Seitenfläche (98, 100) der Antriebsscheibe (22) erstreckt.
